# EUROPÄISCHE PATENTSCHRIFT

(11) **EP 1 437 392 B1**
(45) Veröffentlichungstag und Bekanntmachung des Hinweises auf die Patenterteilung: **03.05.2006**
(21) Anmeldenummer: 04000369.1
(22) Anmeldetag: 09.01.2004
(51) Int. Cl.: C09J 4/00, C08F 2/44, G01N 21/33

(54) **Kontrolle der Härtung von strahlungshärtbaren Klebemitteln**
Control of curing of radiation-curable adhesives
Contrôle de durcissement d'adhésives durcissables par irradiation

(30) Priorität: 10.01.2003 EP 03000447
(43) Veröffentlichungstag der Anmeldung: 14.07.2004
(73) Patentinhaber: Wellomer GmbH, 67059 Ludwigshafen (DE)
(72) Erfinder: Wellmann, Stefanie, 67159 Friedelsheim (DE)
(74) Vertreter: Reitstötter - Kinzebach

(56) Entgegenhaltungen:
- WO-A-98/34980
- WO-A-98/38042
- PATENT ABSTRACTS OF JAPAN vol. 1999, no. 04, 30. April 1999 (1999-04-30) & JP 11 001507 A (TOKUYAMA SEKIYU KAGAKU KK), 6. Januar 1999 (1999-01-06)

## Beschreibung

Die vorliegende Erfindung betrifft ein Verfahren zur Herstellung einer Klebeverbindung mit einem strahlungshärtbaren Klebemittel, wobei eine Kontrolle der Härtung über das Absorptionsverhalten der Klebeverbindung erfolgt.

Strahlungshärtbare Klebemittel haben auf Grund ihrer Befähigung zum sehr schnellen Zusammenfügen von Bauteilen in hoher Stückzahl eine breite technische Anwendung gefunden. Sie können ganz allgemein überall dort zum Einsatz kommen, wo mindestens ein für UV-Strahlung durchlässiges Substrat mit einem anderen in einem Klebeverfahren verbunden wird. Geeignete, für UV-Strahlung durchlässige Substrate sind beispielsweise thermoplastische Kunststoffe, wie Polystyrol und Polyvinylchlorid sowie Glas. Sie können beispielsweise mit weiteren UV-durchlässigen oder -undurchlässigen Kunststoffen sowie mit einer Vielzahl weiterer Substrate, wie beispielsweise Metallen oder keramikähnlichen Materialien, wie sie in elektronischen Bauteilen eingesetzt werden, zusammengefügt werden. Typische Einsatzbereiche sind beispielsweise die Medizintechnik, wie etwa das Kleben von Nadeln in Einwegspritzen, sowie die Elektronikindustrie.

Ein wichtiger Aspekt bei der Herstellung von Klebeverbindungen mit strahlungshärtbaren Klebemitteln ist eine ausreichende Härtung der resultierenden Verklebung sicherzustellen. Dabei soll eine Bestrahlung der Substrate über das zur Erzielung einer ausreichenden Härte erforderliche Maß vermieden werden, da dies in der Regel mit verschiedenen Nachteilen verbunden ist. So sind viele Substrate, speziell im Bereich der Medizintechnik und der Elektronikindustrie, empfindlich gegenüber übermäßig langer UV-Strahlen-Exposition bzw. der beim Einsatz von Mitteldruck- oder Hochdruckgasentladungslampen auftretenden Wärmeentwicklung. Zudem ist eine Bestrahlung über das notwendige Maß hinaus auf Grund der längeren Fertigungszeiten und der höheren Energiekosten wirtschaftlich von Nachteil. Es ist daher übliche Praxis in der Fügetechnologie unter Einsatz strahlungshärtbarer Klebemittel für den jeweiligen Einsatzbereich optimierte Härtungsbedingungen durch Prüfreihen zu ermitteln, bei denen die mechanische Belastbarkeit der erzielten Verklebung gemessen wird. Dies ist jeweils mit einer Zerstörung des Probenmaterials verbunden, wobei zur Qualitätskontrolle auch regelmäßige Kontrollmessungen aus der laufenden Produktion erforderlich sind. Es besteht daher ein großer Bedarf an Indikatoren zur Kontrolle der Härtung bei der Herstellung von Klebeverbindungen mit strahlungshärtbaren Klebemitteln, die eine ausreichende Härtung auch ohne aufwändige Prüfreihen und ohne Zerstörung der Verklebung ermöglichen.

Die US 5,633,313 beschreibt ein Verfahren und eine Vorrichtung zur nichtinvasiven in situ-Messung der Härtung eines Polymers mittels Fluoreszenzemissions-Spektroskopie.

Die DE-A-31 31 448 beschreibt eine für die Herstellung von Photoresistschichten geeignete, photopolymerisierbare Aufzeichnungsmasse, enthaltend
a) mindestens ein thermoplastisches Vinylpolymerisat als Bindemittel,
b) mindestens eine photopolymerisierbare, ethylenisch ungesättigte, niedermolekulare Verbindung,
c) mindestens einen Photoinitiator sowie gegebenenfalls
d) sonstige Zusatzstoffe, wobei es sich u. a. auch um eine photochrome Verbindung, beispielsweise einen Leukofarbstoff, handeln kann.

Die US 4,780,393 beschreibt eine photopolymerisierbare Zusammensetzung, enthaltend
a) ein polymeres Bindemittel,
b) eine Verbindung mit wenigstens einer terminalen, ethylenisch ungesättigten Doppelbindung und mit einer Siedetemperatur bei Umgebungsdruck von mehr als 100 °C,
c) einen Photoinitiator,
d) eine Leukobase eines Triarylmethanfarbstoffs und
e) eine photochrome spiro-Indolino-Benzpyran-Verbindung.

Diese Zusammensetzung eignet sich für strahlungshärtbare Lacke und insbesondere lichtsensitive Kopiermaterialien für diverse Wiedergebungsverfahren.

Die US 5,302,627 beschreibt ein Verfahren zur Feststellung der Härtung einer UV-härtbaren Beschichtungsmasse, wobei eine Farbe eingesetzt wird, die ausgewählt ist unter Anthrachinonfarben mit einem Farbindex Solvent Blue 104, 1-Hydroxy-4-[(methylphenyl)amino]-9,10-anthracendion und einem Azofarbstoffgemisch aus einem Derivat mit einem Farbindex Solvent Blue 99 und einem Derivat mit einem Farbindex Solvent Red 166. Im Rahmen eines Vergleichsversuchs (Farbe 1, Sp. 27, Z. 37ff) wird auch ein Triphenylmethanfarbstoff eingesetzt.

Die WO 98/34980 beschreibt ein Zweikomponentensystem, umfassend:
A) einen ersten Teil, umfassend
   i) wenigstens eine härtbare Komponente,
   ii) wenigstens ein Reduktionsmittel und
   iii) wenigstens einen Di- oder Triphenylmethan-Farbstoff und
B) einen zweiten Teil, umfassend wenigstens ein Peroxid-Oxidationsmittel.

Die Härtung dieser Zweikomponentensysteme erfolgt ohne Einsatz von UV-Strahlung bei Raumtemperatur, wobei ein Farbwechsel auftritt, der den Ablauf der offenen Zeit des Zweikomponentensystems anzeigt.

Keines der zuvor genannten Dokumente beschreibt ein Verfahren zur Herstellung von Klebeverbindungen, bei denen sich die strahlungshärtbare Zusammensetzung nicht auf der Oberfläche, sondern im Inneren des zu bestrahlenden Objekts befindet.

Der vorliegenden Erfindung liegt die Aufgabe zu Grunde, ein Verfahren zur Herstellung einer Klebeverbindung unter Einsatz eines strahlungshärtbares Klebemittels zur Verfügung zu stellen, wobei eine zuverlässige Kontrolle des Fortschreitens und der Beendigung der Härtung der Klebeverbindung möglich ist. Dabei sollen die zuvor beschriebenen Nachteile aus dem Stand der Technik vermieden werden. Vorzugsweise soll bei der Bestrahlung mit elektromagnetischer Strahlung außerhalb des zur Härtung des Klebemittels eingesetzten Bereichs, speziell bei der Bestrahlung mit normalen Tageslicht, keine Änderung des Absorptionsverhaltens

der Klebeverbindung (Farbwechsel) erfolgen. Der eingesetzte Indikator soll sich weiterhin für eine Vielzahl von strahlungshärtbaren Klebemitteln, möglichst auch auf Basis von unterschiedlichen Initiatorsystemen, eignen.

Überraschenderweise wurde nun gefunden, dass diese Aufgabe durch ein Verfahren zur Herstellung einer Klebeverbindung gelöst wird, bei dem ein strahlungshärtbares Klebemittel eingesetzt wird, das als Indikator wenigstens eine Leukobase eines Di- oder Triarylmethan-Farbstoffs und/oder wenigstens einen Azofarbstoff enthält.

Gegenstand der Erfindung ist daher ein Verfahren zur Herstellung einer Klebeverbindung, bei dem man ein erstes Substrat, ein strahlungshärtbares Klebemittel, das wenigstens eine Leukobase eines Di- oder Triarytmethan-Farbstoffs und/oder wenigstens einen Azofarbstoff enthält, und wenigstens ein weiteres Substrat miteinander in Kontakt bringt und anschließend das Klebemittel mit UV-Strahlung härtet, wobei eine Kontrolle der Härtung über das Absorptionsverhalten der Klebeverbindung erfolgt.

Bevorzugt wird in dem erfindungsgemäßen Verfahren ein strahlungshärtbares Klebemittel eingesetat, das wenigstens eine Leukobase eines Di- oder Triarylmethan-Farbstoffs und gegebenenfalls zusätzlich einen Azofarbstoff anthält.

In einer ersten Ausführungsform des erfindungsgemäßen Verfahrens wird zur Kontrolle der Härtung ausschließlich wenigstens eine Leukobase eines Di- oder Triarylmethan-Farbstoffs eingesetzt. Die Erfindung betrifft dann ein Verfahren zur Herstellung einer Klebeverbindung, bei dem man ein erstes Substrat, ein strahlungshärtbares Klebemittel, das wenigstens eine Leukobase eines Di- oder Triarylmethan-Farbstoffs enthält, und wenigstens ein weiteres Substrat miteinander in Kontakt bringt und anschließend das Klebemittel mit UV-Strahlung härtet, wobei eine Kontrolle der Härtung über das Absorptionsverhalten des Klebemittels bzw. der resultierenden Klebeverbindung erfolgt.

Weitere Ausgestaltungen der Erfindung betreffen:
- den ausschließlichen Einsatz wenigstens eines Azofarbstoffs,
- den Einsatz eines Gemischs aus wenigstens einer Leukobase eines Di- oder Triarylmethan-Farbstoffs und wenigstens einem Azofarbstoff,
- den Einsatz eines Gemischs aus wenigstens einer Leukobase eines Di- oder Triarylmethan-Farbstoffs und/oder wenigstens einem Azofarbstoff sowie wenigstens einer weiteren davon verschiedenen Farbkomponente, die unter den Märtungaheldingungen im Wesentlichen keine Änderung ihres Absorptionsverhattens erfährt.

Geeignete zusätzliche Farbkomponenten sind von Di- und Triarylmethan-Farbstoffen und Azofarbstoffen verschiedene Farbstoffe sowie Pigmente.

Die erfindungsgemäß eingesetzten strehtungshärtbaren Klebemittel enthalten vorzugsweise keine weiteren photochromen Verbindungen, wie z. B. die in der US 4,780,393 beschriebenen spiro-Indolino-Benzpyran- Verbindungen.

Die vorliegende Erfindung ermöglicht eine nichtinvasive Kontrolle des Fortschreitens der Härtung strahlungshärtbarer Klebemittel. Unter Kontrolle der Härtung wird dabei ganz allgemein die Kontrolle der Bildung eines ausgehärteten Polymers aus dem eingesetzten strahlungshärtbarenKlebemittel verstanden. Dabei korreliert der Anteil des im Verlauf der Härtung gebildeten ausgehärteten Polymers mit der mechanischen Belastbarkeit der erzielten Verklebung, wie sie z. B. invasiv über Abscher- oder Ausziehexperimente bestimmbar ist. Die erfindungsgemäß eingesetzten Azofarbstoffe und Leukobasen eines Di- oder Triarylmethan-Farbstoffs durchlaufen während der Härtung eine charakteristische Veränderung des Absorptionsspektrums, die ihrerseits mit dem Anteil des im Verlauf der Härtung gebildeten ausgehärteten Polymers und somit mit der mechanischen Belastbarkeit der erzielten Verklebung korreliert. Unter Veränderung des Absorptionsspektrums wird dabei eine Veränderung in der Wellenlänge und/oder der Intensität im Absorptionsspektrum im Verlauf der Härtung der Klebeverbindung verstanden.

Die erfindungsgemäß eingesetzten Azofarbstoffe und Leuko-Farbstoffe eignen sich als Härtungsindikatoren, die im Verlauf der Härtung eines strahlungshärtbaren Klebemittels einen Übergang von einem Ausgangsabsorptionsspektrum des ungehärteten Klebemittels zu einem Endabsorptionsspektrum des gehärteten Klebemittels durchlaufen. Durch Messung des Absorptionsverhaltens während der UV-Härtung und Korrelation mit dem Ausgangs- und/oder dem Endabsorptionsspektrum lässt sich somit der Härtungsgrad im Verlauf der Härtung und insbesondere der Abschluss der Härtung zuverlässig bestimmen.

Die Messung des Härturigsgrads kann nach üblichen Verfahren erfolgen. Dazu zählt beispielsweise eine Kontrastmessung mittels einer auf die Klebeverbindung gerichteten Schwarzweiß-Kamera, die für eine sichere Endpunktsbestimmung ausreichend ist. Genauere Messungen, insbesondere des Reaktionsverlaufs, sind beispielsweise durch Messung der Extinktion und/oder Transmission bei einer bestimmten charakteristischen Wellenlänge möglich, die zweckmäßigerweise im Bereich eines Absorptionsmaximums des Azofarbstoffs oder des zu dem eingesetzten Leuko-Farbstoffs korrespondierenden Farbstoffs liegt. Hierbei erfolgt vorzugsweise zusätzlich eine monochromatische Bestrahlung der Klebeverbindung mit Licht einer Wellenlänge im Bereich des Absorptionsmaximums. In einer bevorzugten Ausführung wird zur Kontrolle der Härtung nach dem erfindungsgemäßen Verfahren ein Farbsensor eingesetzt. Derartige Sensoren zum Erfassen von Farben und Farbtönen sind dem Fachmann bekannt und kommerziell erhältlich. Zur Farbmessung mit einem Farbsensor kann die Klebeverbindung beispielsweise mit verschiedenem monochromatischem Licht nacheinander beleuchtet und der jeweils reflektierte Teil gemessen werden. Als Lichtquellen können dabei verschieden farbige (rote, grüne, blaue) LEDs eingesetzt werden. Zur Farbmessung mittels Sensor kann die Klebeverbindung weiterhin mit weißem Licht bestrahlt und der jeweils reflektierte Teil mit einem Prisma oder mit geeigneten Filtern in die einzelnen Farben zerlegt werden. Möglich ist weiterhin die Farberkennung mit einer Farbkamera.

Werden bei der Härtung Farbstoffe mit einer Absorption im Bereich des sichtbaren Lichts gebildet oder erfolgt ein sichtbarer Farbwechsel, so ist eine zuverlässige Bestimmung des Endpunkts der Härtung in der Regel auch mit dem bloßen menschlichen Auge möglich, wobei zusätzlich eine Farbskala zum Abgleich herangezogen werden kann.

Gegenstand der Erfindung ist auch die Regelung des zuvor beschriebenen Verfahrens zur Herstellung einer Klebeverbindung, bei dem man wenigstens einen Messwert für die Härte der Verklebung zwischen dem ersten und dem/den weiteren Substrat(en) gewinnt und aus diesen Messwerten Regelungseingriffe zur Regelung der Härtung bildet. Bei den gewonnenen Messwerten handelt es sich beispielsweise um Graustufen-, Farb-, Extinktions- und/oder Transmissionswerte. Diese können nach den zuvor beschriebenen Verfahren (z. B. mittels Schwarzweiß- oder Farbkamera oder mit einem Farbsensor) gewonnen werden. Während des Betriebs werden die aktuell gemessenen Daten mit gespeicherten Solldaten verglichen. Bei Übereinstimmung wird dann ein Schaltsignal ausgelöst.

Die Regelungseingriffe betreffen beispielsweise die Dauer und/oder Intensität der UV-Bestrahlung. Die erfindungsgemäß eingesetzten Leukobasen von Di- oder Triarylmethan-Farbstoffen sind in der Regel farblose, weiße oder nur schwach gefärbte Verbindungen, d. h. sie weisen im Bereich des sichtbaren Lichts (380 bis 800 nm) im Wesentlichen keine Absorption auf. Im Verlauf der Härtung des strahlungshärtbaren Klebemittels werden die reduzierten Leukobasen in die Triarylmethan-Farbstoffe überführt, die in der Regel intensiv farbig sind, d. h. sie weisen eine charakteristische Absorption im Bereich des sichtbaren Lichts auf. Für Anwendungen, bei denen eine Färbung der ausgehärteten Verklebungen unerwünscht ist, werden vorzugsweise Leukobasen eingesetzt, bei denen auch die resultierenden Di- und Triarylmethan-Farbstoffe im Wesentlichen keine Absorption im Bereich des sichtbaren Lichts aufweisen.

Die erfindungsgemäß eingesetzten Azofarbstoffen sind in der Regel intensiv farbige Verbindungen, d. h. sie weisen im Bereich des sichtbaren Lichts (380 bis 800 nm) wenigstens ein Absorptionsmaximum auf. Im Verlauf der Härtung des strahlungshärtbaren Klebemittels weisen die Azofarbstoffe eine Abnahme der Extinktion beziehungsweise Zunahme der Transmission im Bereich der Absorptionsmaxima auf. Sie eignen sich daher bevorzugt für Anwendungen, bei denen eine Färbung der ausgehärteten Verklebungen unerwünscht ist.

Durch den Einsatz eines Indikatorgemischs aus wenigstens einer Leukobase eines Di- oder Triarylmethan-Farbstoffs und wenigstens einem Azofarbstoff, oder durch den Einsatz eines Gemischs aus wenigstens einer Leukobase eines Di- oder Triarylmethan-Farbstoffs und/oder wenigstens einem Azofarbstoff sowie wenigstens einer weiteren davon verschiedenen Farbkomponente, die unter den Härtungsbedingungen im Wesentlichen keine Änderung ihres Absorptionsverhaltens erfährt, können eine Vielzahl charakteristischer Farbwechsel erzielt werden. Somit lässt sich das erfindungsgemäße Verfahren flexibel zur Kontrolle der Härtung in einer Vielzahl verschiedener Klebeverfahren einsetzen.

Bei einer Bestrahlung der erfindungsgemäß eingesetzten Azofarbstoffe und Di- und Triarylmethan-Farbstoffe mit elektromagnetischer Strahlung außerhalb des zur Härtung des jeweiligen strahlungshärtbaren Klebemittels eingesetzten Wellenlängenbereichs findet im Wesentlichen keine Veränderung des Absorptionsspektrums statt. Auch bei einer Bestrahlung der erfindungsgemäß eingesetzten Di- und Triarylmethan-Farbstoffe mit für eine Strahlungshärtung prinzipiell geeigneter UV-Strahlung findet in Abwesenheit des strahlungshärtbaren Klebemittels im Wesentlichen keine Veränderung des Absorptionsspektrums statt.

Die Einsatzmenge der Farbstoffe beträgt vorzugsweise 0,0001 bis 1 Gew.-%, besonders bevorzugt 0,001 bis 0,1 Gew.-%. bezogen auf das Gesamtgewicht des Klebemittels.

Im Folgenden umfasst der Ausdruck "Alkyl" geradkettige und verzweigte Alkylgruppen. Vorzugsweise handelt es sich dabei um geradkettige oder verzweigte C₁-C₆-Alkyl-, besonders bevorzugt C₁-C₄-Alkylgruppen. Beispiele für Alkylgruppen sind insbesondere Methyl, Ethyl, propyl, isopropyl, n-Butyl, 2-Butyl, sec-Butyl, tert-Butyl, n-Pentyl, 2-Pentyl, 2-Methylbutyl. 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl und 1-Ethyl-2-methylpropyl.

Die obigen Erläuterungen zum Ausdruck "Alkyl" gelten entsprechend für die Ausdrücke Hydroxyalkyl, Alkoxy, Alkylthio, Alkylamino, Dialkylamino, Alkoxycarbonyl, Alkylaminocarbonyl, Dialkylaminocarbonyl und Alkylcarbonylamino.

Carboxylat und Sulfonat stehen im Rahmen dieser Erfindung vorzugsweise für ein Derivat einer Carbonsäurefunktion bzw. einer Sulfonsäurefunktion, insbesondere für ein Metallcarboxylat oder -sulfonat, eine Carbonsäureester- oder Sulfonsäureesterfunktion oder eine Carbonsäure- oder Sulfonsäureamidfunktion. Dazu zählen z. B. die Ester mit C₁-C₆-Alkanolen, wie Methanol, Ethanol, n-Propanol, Isopropanol, n-Butanol, sec.-Butanol, und tert.-Butanol,

Der Ausdruck "Acyl" steht im Sinne der vorliegenden Erfindung für Alkanoyl- oder Aroylgruppen mit im Allgemeinen 2 bis 10, vorzugsweise 2 bis 6 Kohlenstoffatomen, beispielsweise für die Formyl-, Acetyl-, Propanoyl-, Butanoyl-, Pentanoyl-, Hexanoyl-, Heptanoyl-, 2-Ethylhexanoyl-, 2-Propylheptanoyl-, Benzoyl- oder Naphthoyl-Gruppe.

Alkylamino steht vorzugsweise für Methylamino, Ethylamino, Propylamino, lsupropylamino, n-Butylamino, t.-Butylamino oder Phenylamino. Dialkylamino steht vorzugsweise für N,N-Dimethylamino, N,N-Diethylamino, N,N-Dipropylamino, N,N-DÜsopropylamino, N,N-Di-n-butylamino, N,N-Di-t.-butylamino oder N,N-Diphenylamino.

Halogen steht für Fluor, Chlor, Brom und lod, bevorzugt für Fluor, Chlor und Brom.

Die Leukobasen der Di- oder Triarylmethan-Farbstoffe sind vorzugsweise ausgewählt unter Verbindungen der allgemeinen Formel I 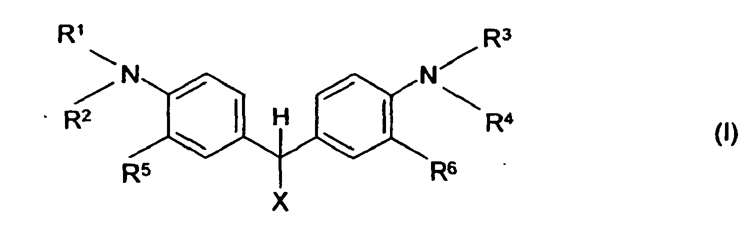 worin
- R¹, R², R³ und R⁴: unabhängig voneinander jeweils für C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl stehen,
- R⁵ und R⁶: unabhängig voneinander jeweils für Wasserstoff oder Methyl stehen, und
- X: für Wasserstoff, gegebenenfalls substituiertes Phenyl oder gegebenenfalls substituiertes Naphthyl steht.

Diese Leuko-Farbstoffe können sowohl geradkettige als auch verzweigte Alkylketten haben, die ferner mit beispielsweise Hydroxy, Chlor, Cyano, Phenyl oder Hydroxysulfonylphenyl substituiert sein können.

Naphthylgruppen können als Substituenten z. B. Amino, Mono- oder Di-(C₁-C₄)-alkylamino, Mono- oder Diphenylamino oder Hydroxysulfonyl tragen.

Phenylgruppen in Formel I können z. B. mit Methyl, Chlor, Amino, Mono- oder Di-(C₁-C₄)-alkylamino, Mono- oder Diphenylamino, Hydroxy, C₁-C₄-Alkoxyl oder Hydroxysulfonyl substituiert sein.

Wenn die Farbstoffe substituierte Alkyl-, Phenyl- oder Naphthylgruppen tragen, sind die Gruppen in der Regel ein- bis dreifach substituiert.

Leuko-Farbstoffe der Formel 1 sind allgemein bekannt. Beispielhaft seien genannt die Leukobasen der folgenden Farbstoffe:
Malachitgrün (C.I. 42000 Basic Green 4),
Kristallviolett (C.I- 42555 Basic Violet 3),
Methylviolett (C.I. 42535 Basic Violet 1),
Michlers Hydrolblau,
Brillantgrün (C.I. 42040 Basic Green 1),
Victoriareinblau (C.I. 42595 Basic Blue 7),
Ethylviolett (C.I. 42600 Basic Violet 4) und
Victoria Blau B (C.I. 44045 Basic Blue 26).

Die Einsatzmenge der Leukobasen beträgt vorzugsweise 0,0001 bis 1 Gew.-%, besonders bevorzugt 0,001 bis 0,1 Gew.-%, bezogen auf das Gesamtgewicht des Klebemittels.

Wird in dem erfindungsgemäßen Verfahren wenigstens ein Azofarbstoff eingesetzt, so ist dieser vorzugsweise ausgewählt unter Verbindungen der allgemeinen Formel II 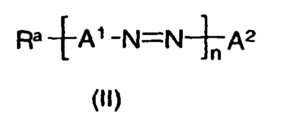 worin
- R^{a} für: Wasserstoff oder einen davon verschiedenen Substituenten steht,
- A¹ und A²: unabhängig voneinander für Aryl- oder Hetarylreste stehen, die 1, 2, 3 oder 4 Substituenten aufweisen können, die ausgewählt sind unter C₁-C₆-Alkyl, Hydroxy, Hydroxy-C₁-C₆-alkyl, C₁-C₆-Alkoxy, C₁-C₆-Alkylthio, Amino, C₁-C₆-Alkylamino, Di-(C₁-C₆-)alkylamino, Carboxylat, Sulfonat, Sulfonamid, Alkoxycarbonyl, Acyl, C₁-C₆-Alkylaminocarbonyl, Di-(C₁-C₆-)alkylaminocarbonyl, C₁-C₆-Alkylcarbonylamino, Nitro, Halogen und Cyano, und
- n: für eine ganze Zahl von 1 bis 4 steht.

Wenn R^{a} für einen von Wasserstoff verschiedenen Substituenten steht, so ist dieser vorzugsweise ausgewählt unter C₁-C₆-Alkyl, Hydroxy, Hydroxy-C₁-C₆-alkyl, C₁-C₆-Alkoxy, C₁-C₆-Alkylthio, Amino, C₁-C₆-Alkylamino, Di-(C₁-C₆-)alkylamino, Carboxylat, Sulfonat, Sulfonamid, Alkoxycarbonyl, Acyl, C₁-C₆-Alkylaminocarbonyl, Di-(C₁-C₆-)alkylaminocarbonyl, C₁-C₆-Alkylcarbonylamino, Nitro, Halogen und Cyano.

Vorzugsweise stehen A¹ und A² unabhängig voneinander für einen von gegebenenfalls substituiertem Benzol, Naphthalin, Pyridin, Pyrimidin, Pyrazin, Pyrrol, Pyrazol, Imidazol, Triazol, Diphenylmethan, Diphenylamino, Phenylaminosulfonylbenzol, Pyridylaminosulfonylbenzol, Pyrimidinylaminosulfonylbenzol ausgewählten Aryl- oder Hetarylrest.

Wenn n für eine ganze Zahl von 2 bis 4 steht, so können die einzelnen Reste A¹ jeweils gleiche oder verschiedene Bedeutungen aufweisen.

Bevorzugt steht n für 1 oder 2.

Azofarbstoffe der Formel II sind allgemein bekannt. Beispielhaft seien genannt:
Sudan I (C.I. 12055 Solvent Yellow 14), 1-Phenylazo-2-naphthol,
Sudan II (C.I. 12140 Solvent Orange 7), 1-(2,4-Dimethylbenzolazo)-2-naphthol,
Sudan III (C.I. 26100 Solvent Red 23), 1-[(4-Benzolazo)-benzolazo]-2-naphthol,
Sudan IV (C.I. 26105 Solvent Red 24), 2',3-Dimethyl-4-(2-hydroxy-1-naphthylazo)-azobenzol, Sudanorange G (C.I. 11920 Solvent Orange 1), 2,4-Dihydroxyazobenzol,
Sudanrot B (C.I. 26110 Solvent Red 25), 2,3'-Dimethyl-4-(2-hydroxy-1-naphthylazo)-azobenzol,
Sudanrot 7B, Fettrot (C.I. 26050 Solvent Red 19), 4-(2-Ethylamino-1-naphthylazo)-azobenzol,
Sudanschwarz B (C.I. 26150 Solvent Black 3), 7-[4-(Benzolazo)-naphthyl-1-azo]2,2-dimethyl-2,3-dihydroperimidin.

Besonders gute Ergebnisse werden insbesondere beim Einsatz von Sudanschwarz B als alleinigem Indikatorfarbstoff oder mit Farbstoffgemischen erzielt, die Sudanschwarz B enthalten. Dieser Farbstoff ermöglicht die Anwendung sehr geringer Einsatzmengen und wird während des Härtungsvorgangs entfärbt, so dass nach Beendigung der Härtung vom menschlichen Auge keine oder zumindest keine störende Färbung mehr wahrgenommen wird.

Die Einsatzmenge der Azofarbstoffe beträgt vorzugsweise 0,0001 bis 1 Gew.-%, besonders bevorzugt 0,001 bis 0,1 Gew.%, bezogen auf das Gesamtgewicht des Klebemittels.

In einer speziellen Ausführung enthält das erfindungsgemäß eingesetzte strahlungshärtbare Klebemittel wenigstens eine weitere Farbkomponente, die unter den Härtungsbedingungen im Wesentlichen keine Änderung ihres Absorptionsverhaltens erfährt. Diese ist ausgewählt unter von Dl- und Triarylmethan-Farbstoffen und Azofarbstoffen verschiedenen Farbstoffe sowie Pigmenten.

Die Einsatzmenge der zusätzlichen Farbkomponente beträgt vorzugsweise 0.0001 bis 1 Gew.-%, besonders bevorzugt 0,001 bis 0,1 Gew.-%, bezogen auf das Gesamtgewicht des Klebemittels.

Als zusätzliche Farbkomponente geeignete Pigmente sind natürlich vorkommende und synthetische anorganische und organische Pigmente. Bevorzugt werden synthetische organische Pigmente eingesetzt. Diese sind beispielsweise ausgewählt unter Azo-Pigmenten, Indigoiden, Dioxazin-, Chinacridon-, Phthalocyanin-, Isoindolinon-, Perylen-, Perinon-, Metallkomplex- und Diketopyroiopyrrol-Pigmenten und Mischungen davon. Eine sehr gute Kontrolle der Härtung wird beispielsweise beim Einsatz von synthetischen organischen Pigmenten erzielt, die Orange- bis Rottöne aufweisen. Diese zeigen in Kombination mit Azo- und Di- und Triarylmethan-farbstoffen charakteristische Farbwechsel bei der UV-Härtung der erfindungsgemäß eingesetzten Klebemittel. So wird z.B. bei der Kombination von Leukvkristallviolett mit einem roten Pigment (z B. lrgazin ® PP Rot, Ciba) ein charakteristischer Farbwechsel von rot nach violett beobachtet. Geeignete synthetische organische Pigmente sind beispielsweise die Irgazin® Marken der Firma Ciba. Dazu zählen z. B. Irgazin yellow 2RLT, Irgazin Orange 2038, Irgazinorange DPP, Irgazinschalrach DPP, Irgazinrot DPP und Irgazin Rubin DPP.

Die erfindungsgemäß eingesetzten strahlungshärtbaren Klebemittel enthalten in einer ersten Ausführungsform wenigstens ein Polymer, das ethylenisch ungesättigte Doppelbindungen aufweist, die sich unter Einwirkung von elektromagnetischer Strahlung, speziell UV-Strahlung, radikalisch polymerisieren (härten) lassen. Hierbei wird der Gehalt an ethylenisch ungesättigten Doppelbindungen im Polymer so gewählt, dass eine wirksame Verklebung gewährleistet wird.

im Folgenden werden Verbindungen, die sich von Acrylsäure und Methacrylsäure ableiten können, teilweise verkürzt durch Einfügen der Silbe "(meth)" in die von der Acrylsäure abgeleitete Verbindung bezeichnet.

Bevorzugt weisen die in den strahlungshärtbaren Klebemitteln eingesetzten Polymere ethylenisch ungesättigte Doppelbindungen innerhalb der Hauptkette, einer der Seitenketten und/oder in Form von an die Haupt- oder Seitenketten gebundenen Gruppen auf. Geeignete ethylenisch ungesättigte Gruppen sind beispielsweise Gruppen der allgemeinen Formel

-Y-X-CR⁷=CHR⁸

worin
- X: für eine Einfachbindung, CH₂ oder CO steht,
- Y: für eine Einfachbindung, O oder NH steht, wobei X und Y auch gemeinsam für eine Einfachbindung stehen können,
- R⁷: für Wasserstoff oder C₁-C₄-Alkyl, vorzugsweise Methyl, steht und
- R⁸: für Wasserstoff, C₁-C₄-Alkyl, vorzugsweise Methyl, oder Aryl, vorzugsweise Phenyl, steht.

Geeignete strahlungshärtbare Polymere sind in P. K. T. Oldring, Chemistry & Technology of UV & EB Formulations for Coating, Inks & Paints, Bd. II, SITA Technology, London (1991) beschrieben, worauf hier in vollem Umfang Bezug genommen wird.

Vorzugsweise enthält das strahlungshärtbare Klebemittel wenigstens ein Polymer mit ethylenisch ungesättigten Doppelbindungen, das ausgewählt ist unter Dien-Homo- und Copolymeren, Polyurethanen, Polyestern, Polyethern, Epoxidharzen, Melaminharzen, Copolymerisaten auf der Basis von (Meth)acrylsäureestern, Silikonen und Mischungen davon.

Geeignete ethylenisch ungesättigten Silikone sind dem Fachmann hinreichend bekannt und grundsätzlich kommerziell erhältlich. Wegen weiterer Details sei hiermit auf P. K. T. Oldring, S. 135 bis S. 152 und die dort zitierte Literatur verwiesen.

Bei den ethylenisch ungesättigte Doppelbindungen aufweisenden Siliconen handelt es sich in der Regel um lineare oder cyclische Polydimethylsiloxane, die Allyl-, Methallyl, Acryl- oder Methacrylgruppen aufweisen. Die ethylenisch ungesättigten Gruppen sind entweder direkt über ein Sauerstoffatom oder über eine Alkylengruppe, die linear oder verzweigt ist und durch ein oder mehrere, nicht benachbarte Sauerstoffatome unterbrochen sein kann, mit den Siliciumatomen des Polydimethylsilogangrundgerüsts verbunden.

Geeignete ethylenisch ungesättigte Epoxidharzderivate umfassen insbesondere die Umsetzungsprodukte von Epoxygruppen enthaltenden Verbindungen mit ethylenisch ungesättigten Monocarbonsäuren, wie Acrylsäure, Methacrylsäure, Crotonsäure und Zimtsäure. Anstelle oder zusammen mit den Monocarbonsäuren können auch die Halbester ethylenisch ungesättigter Dicarbonsäuren mit Monoalkoholen, wie Methanol, Ethanol, n-Propanol, Isopropanol, n-Butanol, tert.-Butanol, n-Hexanol und 2-Ethylhexanol eingesetzt werden. Geeignete Epoxygruppen enthaltende Substrate umfassen insbesondere die Polyglycidylether mehrwertiger Alkohole. Hierzu zählen insbesondere die Diglycidylether des Bisphenols A und seiner Derivate. Ferner können durch Umsetzung von OH-Gruppen in Epoxidharzen mit geeigneten Derivaten ethylenisch ungesättigter Carbonsäuren, z. B. den Säurechloriden, weitere ethylenisch ungesättigte Gruppen in das Epoxidharz eingeführt werden. Ethylenisch ungesättigte Epoxidharze sind dem Fachmann hinreichend bekannt und kommerziell erhältlich. Wegen weiterer Details wird auf P. K. T. Oldring, S. 37 bis S. 68 sowie die dort zitierte Literatur, verwiesen.

Beispiele für ethylenisch ungesättigte Melaminharze sind die Umsetzungsprodukte von Melamin/Formaldehyd-Kondensationsprodukten mit OH-Gruppen enthaltenden ungesättigten Verbindungen, ethylenisch ungesättigten Dicarbonsäureanhydriden, wie Maleinsäureanhydrid, oder mit den Amiden ethylenisch ungesättigter Monocarbonsäuren. Geeignete OH-Gruppen enthaltende Verbindungen umfassen beispielsweise die Hydroxyalkylester ethylenisch ungesättigter Carbonsäuren, insbesondere der Acrylsäure und der Methacrylsäure. Derartige Melaminharze sind dem Fachmann bekannt und beispielsweise in P. K. T. Oldring, S. 208 bis S. 214 beschrieben, auf die wegen weiterer Details hiermit verwiesen wird.

Als ethylenisch ungesättigte Polymerisate können ferner Polyester eingesetzt werden, die ethylenisch ungesättigte Doppelbindungen enthalten. Hierzu zählen so genannte ethylenisch ungesättigte Polyester, die beispielsweise durch Copolykondensation von aliphatischen und aromatischen Dicarbonsäuren zusammen mit ethylenisch ungesättigten Dicarbonsäuren bzw. deren Anhydriden und niedermolekularen Diolen erhältlich sind. Hierzu zählen des Weiteren ethylenisch modifizierte Polyester, die durch Derivatisierung freier OH-Gruppen in nicht ethylenisch ungesättigten Polyestern erhältlich sind. Die Derivatisierung der OH-Gruppen kann separat, oder bei der Herstellung des OH-Gruppen-haltigen Polyesters erfolgen. Geeignete aliphatische und aromatische Dicarbonsäuren bzw. deren Anhydride sind vorzugsweise ausgewählt unter Bernsteinsäure, Bernsteinsäureanhydrid, Glutarsäure, Glutarsäureanhydrid, Adipinsäure, Phthalsäure und insbesondere Phthalsäureanhydrid. Geeignete Diole sind vorzugsweise ausgewählt unter Ethylenglykol, 1,2-Propytenglykol, 1,4-Butandiol, 1,5-Pentandiol, Neopentylglykol und 1,6-Hexandiol. Ein geeignetes Anhydrid einer ethylenisch ungesättigten Dicarbonsäure ist Maleinsäureanhydrid.

Geeignete Hydroxylgruppen enthaltende Polyester für die Modifizierung zu ethylenisch modifizierten Polyestern können in üblicher Weise durch Polykondensation von zwei- oder mehrwertigen Carbonsäuren mit zweiwertigen Alkoholen und/oder wenigstens einer weiteren mehrwertigen Alkoholkomponente hergestellt werden. Als Carbonsäurekomponente kommen in diesem Fall aliphatische und/oder aromatische Carbonsäuren, deren Ester und Anhydride in Frage. Hierzu zählen Bernsteinsäure, Bernsteinsäureanhydrid, Glutarsäure, Glutarsäureanhydrid, Adipinsäure, Phthalsäure, Phthalsäureanhydrid, Trimellithsäure und Trimellithsäureanhydrid. Als Diolkomponente kommt z. B. Ethylenglykol, Propylenglykof, 1,4-Butandiol, 1,5-Pentandiol, Neopentylglykol und 1,6-Hexandiol in Betracht. Als höherwertige Alkohole kommen insbesondere drei- bis sechswertige Alkohole, wie Glycerin, Pentaerythrit, Sorbit und Erythrit in Frage. Sofern im Polykondensationsschritt die Gesamtmolzahl der OH-Gruppen in der Alkoholkomponente größer ist als die Gesamtmolzahl der Carboxylgruppen in der Säurekomponente, erhält man einen OH-Gruppen enthaltenden Polyester. Diese OH-Gruppen können in bekannter Weise mit den zuvor genannten ethylenisch ungesättigten Carbonsäuren, insbesondere mit Acrylsäure und Methacrylsäure, nach üblichen Verfahren verestert werden. Die Entfernung des bei der Veresterungsreaktion gebildeten Reaktionswassers kann dabei z. B. durch wasserentziehende Mittel, extraktiv oder durch azeotrope Destillation erfolgen. Die Veresterung erfolgt im Allgemeinen in Gegenwart eines Katalysators, z. B. einer starken Säure, wie Schwefelsäure, wasserfreiem Chlorwasserstoff, Toluolsulfonsäure und/oder sauren Ionenaustauschern. Ferner können die OH-Gruppen im Polyester mit reaktiven, ethylenisch ungesättigten Verbindungen verethert werden, z. B. mit Allylchlorid oder Methallylchlorid. Wegen weiterer Details sei auf P. K. T. Oldring, S. 123 bis S. 135 verwiesen. Die vorgenannten Produkte sind dem Fachmann hinreichend bekannt und kommerziell erhältlich.

Als Polymere können auch ethylenisch ungesättigte Polyether eingesetzt werden. Ethylenisch ungesättigte Polyether sind aufgebaut aus einem Polyethergrundkörper, der an seinen Enden ethylenisch ungesättigte Gruppen aufweist. Der Polyethergrundkörper ist beispielsweise durch Umsetzung eines Starters, z. B. eines zwei- oder mehrwertigen Alkohols, beispielsweise eines Alkohols, der oben als Di- oder Polyolkomponente für die Herstellung von Polyestern genannt wurde, mit Alkylenoxiden, vorzugsweise mit Ethylenoxid und/oder Propylenoxid erhältlich. Dieser Polyethergrundkörper enthält noch freie OH-Gruppen, die in der oben beschriebenen Weise in ethylenisch ungesättigte Gruppen überführt oder mit ethylenisch ungesättigten Carbonsäuren, insbesondere Acrylsäure und/oder Methacrylsäure, oder geeigneten Derivaten wie Säurechloriden, C₁-C₄-Alkylestern oder Anhydriden verestert werden können. Als Polymere kommen ferner ethylenisch ungesättigte Gruppen aufweisende Copolymerisate auf der Basis von (Meth)acrylsäureestem in Frage. Derartige ethylenisch ungesättigte Polymere sind in der Regel durch polymeranaloge Umsetzungen von funktionalisierten Polymeren erhältlich, die funktionelle Gruppen aufweisen, die zur Reaktion mit dazu komplementären funktionellen Gruppen ethylenisch ungesättigter Verbindungen befähigt sind. Geeignete funktionelle Gruppen sind beispielsweise Hydroxyl-, Carbonyl-, Carboxyl-, Isocyanat-, Amino- und/oder Epoxidgruppen.

Geeignete Reaktionstypen sind hierbei Kondensations- oder Additionsreaktionen. In Betracht kommen beispielsweise Funktionalitätenpaare, wie Isocyanat/Hydroxyl, Isocyanat/Amino, Anhydrid/Hydroxyl, Anhydrid/Amino, Carbonyl/Amino. Carbonsäurechlorid/Hydroxyl, Glycidyl/Hydroxyl, Glycidyl/Amino oder Amid und Glycidyl/Carboxyl. In einer geeigneten Ausführungsform ist das ethylenisch ungesättigte Polymer erhältlich durch Umsetzung eines funktionalisierten Polymers, das Glycidylgruppen aufweist, mit ethylenisch ungesättigten Hydroxylgruppen aufweisenden Verbindungen, insbesondere den Hydroxyalkytestern der oben genannten ethylenisch ungesättigten Carbonsäuren, z. B. 2-Hydroxyethylacrylat.

Bevorzugt enthalten die erfindungsgemäß eingesetzten Klebemittel wenigstens ein Polyurethanderivat, das ethylenisch ungesättigte Doppelbindungen enthält. Derartige Polyurethane sind beispielsweise durch Umsetzung Isocyanatgruppen enthaltender Polyurethane mit ethylenisch ungesättigten Verbindungen, die ihrerseits wenigstens eine gegenüber Isocyanatgruppen reaktive funktionelle Gruppe aufweisen, beispielsweise eine primäre oder sekundäre Aminogruppe oder eine Hydroxylgruppe, erhältlich.

Bevorzugt sind Urethan(meth)acrylate a), die ein gewichtsmittleres Molekulargewicht Mw im Bereich von 500 bis 6000, bevorzugt 750 bis 5000 und speziell 1000 bis 2000 aufweisen.

Vorzugsweise sind die ethylenisch ungesättigten Polyurethanderivate ausgewählt unter Urethan(meth)acrylaten, die
a1) wenigstens ein Polyisocyanat mit einer NCO-Funktionalität von mindestens 2, das ausgewählt ist unter aliphatischen und cycloaliphatischen Diisocyanaten, den Isocyanuraten und Biureten davon,
a2) wenigstens ein Polyesterpolyol und
a3) wenigstens ein Hydroxyalkyl(meth)acrylat
eingebaut enthalten.

Vorzugsweise weisen die Isocyanate a1) eine NCO-Funktionalität im Bereich von 2 bis 5 auf. Geeignete Diisocyanate sind beispielsweise Tetramethylendiisocyanat, Hexamethylendiisocyanat, Trimethylhexandiisocyanat, Tetramethylhexandiisocyanat, 1,2-,1,3- und 1,4-Diisocyanatocyclohexan, 4,4'-Di(isocyanatocyclohexyl)methan und Isophorondiisocyanat. Geeignete trifunktionale Isocyanatverbindungen sind die Isocyanurate der zuvor genannten Diisocyanate. Geeignete tri- und höherfunktionale Isocyanatverbindungen sind die Biurete der zuvor genannten Diisocyanate. Die zuvor genannten Polyisocyanate können allein oder in Form von Mischungen eingesetzt werden. Vorzugsweise sind die Polyisocyanate a1) ausgewählt unter Hexamethylendiisocyanat, Isophorondiisocyanat, 4,4'-Di(isocyanatocyclohexyl)methan, dem Biuret von Hexamethylendiisocyanat, dem Isocyanurat von Hexamethylendiisocyanat und Mischungen davon.

Geeignete Polyesterpolyole a2) sind lineare und verzweigte Polymere mit endständigen OH-Gruppen, z. B. solche mit mindestens zwei OH-Endgruppen. Die Polyesterpolyole lassen sich in einfacher Weise durch Veresterung von Di-, Tri- und/oder Polycarbonsäuren mit Di-, Tri- und/oder Polyolen herstellen. Bevorzugte Carbonsäuren sind aliphatische Dicarbonsäuren mit 2 bis 10 Kohlenstoffatomen, beispielsweise Malonsäure, Bernsteinsäure, Glutarsäure und Adlpinsäure. Geeignete Diole sind **z.** B. Glykole, bevorzugt Glykole mit 2 bis 10 Kohlenstoffatomen. Beispiele für geeignete Glykole sind z. B. 1,2-Ethandiol, 1,3-Propandiol, 1,4-Butandiol, 1,5-Pentandiol, 1,6-Hexandiol und Gemische davon. Ein geeignetes Polyesterpolyol ist beispielsweise das Polykondensationsprodukt von Ethylenglykol, 1,6-Hexandiol und Adipinsäure.

Geeignete Hydroxyalkyl(meth)acrylate a3) sind beispielsweise 2-Hydroxyethylacrylat, 2-Hydroxyethylmethacrylat, 2-Hydroxypropylacrylat und 2-Hydroxypropylmethacrylat.

Die Herstellung der in den erfindungsgemäßen Klebemitteln eingesetzten Urethan-(meth)acrylate kann in bekannter Weise erfolgen. Das molare Verhältnis von NCO-Gruppen der Verbindungen a1) zu OH-Gruppen der Verbindungen a2) und a3) liegt vorzugsweise in einem Bereich von 0,3:1 bis 1,1:1, insbesondere 0,6:1 bis 0,99:1. Die erhaltenen Urethan-(meth)acrylate weisen in der Regel keine Isocyanatgruppen mehr auf. Die Reaktionstemperatur liegt üblicherweise in einem Bereich von 0 bis 100 °C. Zur Beschleunigung der Reaktion können übliche Katalysatoren, wie Dibutylzinndilaurat eingesetzt werden.

Des Weiteren bevorzugt enthalten die erfindungsgemäß eingesetzten Klebemittel wenigstens ein Dien-Homo- oder Copolymer. Diese Polydiene weisen Wiederholungseinheiten auf, die sich Olefinen mit zwei Doppelbindungen, wie Butadien, Isopren, 1,3-Pentadien und Mischungen davon, ableiten. Geeignete Polydiene können im Wesentlichen ausschließlich die 1,2- und 1,4-Polymerisationsprodukte als auch Mischformen mit beliebigen 1,2- und 1,4-Anteilen aufweisen. Verfahren zur Einstellung der 1,2- und 1,4-Anteile bei der Polymerisation konjugierter Diene sind dem Fachmann bekannt. Polydiene mit Wiederholungseinheiten von 1,4-Additionsprodukten weisen in der Hauptkette ethylenisch ungesättigte, härtbare Gruppen auf. Polydiene mit Wiederholungseinheiten von 1,2-Additionsprodukten weisen seitenständige, ethylenisch ungesättigte, härtbare Gruppen auf. Bevorzugt werden Klebemittel eingesetzt, die wenigstens teilweise oder überwiegend Wiederholungseinheiten von 1,4-Additionsprodukten aufweisen. Die in den Klebemitteln eingesetzten Polydiene können gewünschtenfalls teilweise hydriert sein.

Geeignete Dien-Copolymere weisen wenigstens ein mit Dienen copolymerisierbares Comonomer auf, das vorzugsweise ausgewählt ist unter C₂-C₈-Monoolefinen, Estern α,β-ethylenisch ungesättigter Mono- und Dicarbonsäuren mit C₁-C₃₀-Alkanolen, Vinylaromaten. Vinylhalogeniden, Vinylidenhalogeniden, Amiden α,β-ethylenisch ungesättigter Mono- und Dicarbonsäuren und Mischungen davon.

Bevorzugt enthalten die erfindungsgemäß eingesetzten Klebemittel wenigstens ein Isopren-Homo- oder -Copolymer. Dazu zählen Isopren-Homopolymere, teilhydrierte Isopren-Homopolymere, Isopren-Butadien-Copolymere und Isopren-Styrol-Copolymere. Dazu zählen weiterhin durch polymeranaloge Umsetzung erhaltene Isoprenpolymere. Eine geeignete polymeranaloge Umsetzung umfasst die Umsetzung eines Teils der in dem Isoprenpolymer enthaltenen Doppelbindungen mit Maleinsäureanhydrid in einer En-Reaktion sowie gegebenenfalls eine Folgeumsetzung der Anhydridgruppen, z. B. in einer Veresterung oder Amidierung. Geeignet sind auch endständige funktionalisierte, beispielsweise OH-terminierte, Isoprenpolymere.

Vorzugsweise weisen die in den strahlungshärtbaren Klebemitteln eingesetzten Polymere ein gewichtsmittleres Molekulargewicht M_{w} im Bereich von 500 bis 100000. bevorzugt 1000 bis 50000, auf.

Bevorzugt enthalten die erfindungsgemäß eingesetzten Klebemittel wenigstens ein ethylenisch ungesättigtes Polymer in einer Menge von 5 bis 95 Gew.-%, bevorzugt 10 bis 90 Gew.-% und insbesondere 15 bis 80 Gew.-%, bezogen auf das Gesamtgewicht des Klebemittels.

Die erfindungsgemäß eingesetzten Klebemittel können zusätzlich wenigstens eine weitere niedermolekulare α,β-ethylenisch ungesättigte Verbindung enthalten. Derartige Verbindungen weisen vorzugsweise ein Molekulargewicht von höchstens 500 g/mol, insbesondere höchstens 350 g/mol, auf.

Geeignete niedermolekulare α,β-ethylenisch ungesättigte Verbindungen sind beispielsweise die zuvor als Comonomere der Dien-Copolymere aufgezählten Verbindungen. Bevorzugt sind die Amide der Acrylsäure oder Methacrylsäure mit Dialkylarninen, die vorzugsweise 1 bis 10 Kohlenstoffatome pro Alkylrest aufweisen, wie N,N-Dimethylacrylamid und N,N-Dimethylmethacrylamid. Bevorzugt sind weiterhin die Ester der Acrylsäure und Methacrylsäure mit Alkanolen, vorzugsweise C₁-C₂₀-Alkanolen. Dazu zählen beispielsweise Methyl(meth)acrylat, Ethyl(meth)acrylat, n-Propyl(meth)acrylat. Bevorzugt sind Weiterhin die Ester der Acrylsäure und Methacrylsäure mit Diolen, die vorzugsweise 2 bis 10 C-Atome aufweisen. Dazu zählen beispielsweise 2-Hydroxyethyl(meth)acrylat, 3-Hydroxypropyl(meth)acrylat und 4-Hydroxybutyl-(meth)acrylat Durch den Einsatz von niedermolekularen α,β-ethylenisch ungesättigten Verbindungen können die Hafteigenschaften der erfindungsgemäßen Klebemittel gegenüber verschiedenen zu verldebenden Substraten modifiziert werden. Zur Herstellung von Klebeverbindungen zwischen metallischen und nichtmetallischen Substraten ist es beispielsweise vorteilhaft, wenn der Klebstoffformulierung wenigstens eine solche Verbindung als Haftvermittler zugesetzt wird.

Das erfindungsgemäß eingesetzte Klebemittel enthält in der Regel wenigstens eine niedermolekulare α,β-ethylenisch ungesättigte Verbindung in einer Menge von 0 bis 20 Gew.-%, vorzugsweise in einer Menge von 2 bis 15 Gew.-%, Insbesondere 4 bis 13 Gew.-%, bezogen auf das Gesamtgewicht des Klebemittels.

Die erfindungsgemäß eingesetzten strahlungshärtbaren Klebemittel auf Basis ethylenisch ungesättigter Polymere enthalten im Allgemeinen wenigstens einen Photoinitiator. Geeignete Photoinitiatoren sind beispielsweise ausgewählt unter Hydroxycyclaalkylphenonen, aromatischen Acyloinen, Benzophenon, Benzophenonderivaten, Michlers Keton, Anthracenderivaten, Naphthochinonen, Anthrachinon und Anthrachinonderivaten, Xanthon und Xanthonderivaten, Acylphosphinoxiden, Thiopropionsäureestern und Mischungen davon.

Ein als Photoinitiator geeignetes Hydroxycycloalkylphenon ist 1-Hydroxycyclohexylphenon (Irgacure® 184, Fa. Ciba Spezialitätenchemie AG). Ein geeignetes aromatisches Acyloin ist 1-Phenyl-2-hydroxy-2-methylpropan-1-on (Darocure® 1173, Fa. Ciba Spezialitätenchemie AG). Dieser Photoinitiator zeichnet sich durch seine geringe Vergilbungsneigung aus. Geeignete Benzophenonderivate sind beispielsweise Alkylbenzophenone, wie 4-Methylbenzophenon, 2,4-Dimethylbenzophenon, etc. Geeignete Anthrachinonderivate sind beispielsweise β-Methylanthrachinon und tert.-Butylanthrachinon. Geeignete Acylphosphinoxide sind beispielsweise Monoacylphosphinoxide, wie 2,4,6-Trimethylbenzoyldiphenylphosphinoxid (Lucirin® TPO, BASF Aktiengesellschaft), Diphenyl-(2,4,6-trimethylbenzoyl)-phosphinoxid (Darocure® TPO, Fa. Ciba Spezialitätenchemie AG), (2,6-Dimethoxybenzoyl)-2,4,4-trimethylpentylphosphinoxid und Bisacylphosphinoxide, z. B. Phenyl-bis(2,4,6-trimethylbenzoyl)-phosphinoxid (Irgacure® 819, Fa. Ciba Spezialitätenchemie AG). Ein geeigneter Thiopropionsäureester ist Pentaerythrittetrakis-3-mercaptopropionat.

Geeignete Xanthonderivate weisen beispielsweise ein Xanthon- oder Thioxanthon-Grundgerüst auf, worin jeder der beiden Benzolringe unabhängig voneinander einen, zwei oder drei Substituenten aufweisen kann. Geeignete Substituenten sind beispielsweise.Alkyl, Alkoxy, Cycloalkyl, Cycloalkoxy, Aryl, Aryloxy, Halogen, Acyl, Alkoxycarbonyl, Hydroxy, Amino, Nitro und Cyano. Bevorzugt sind Thioxanthone, wobei einer der beiden Benzolringe einen oder zwei Substituenten aufweist, die vorzugsweise ausgewählt sind unter C₁-C₄-Alkyl, wie Methyl, Ethyl, Isopropyl und tert.-Butyl, C₁-C₄-Alkoxy, wie Methoxy, Ethoxy, Propyloxy und Butyloxy und Halogen, wie z. B. Chlor. Derartige Thioxanthonderivate sind beispielsweise von der Fa. Lambson unter den Bezeichnungen Speedcure®ITX, DETX, CTX und CPTX kommerziell erhältlich.

Geeignete Anthracenderivate weisen beispielsweise in einem oder in beiden der äußeren Benzolringe jeweils einen, zwei oder drei Substituenten auf. Geeignete Substituenten sind die zuvor bei den Xanthonderivaten genannten, worauf hier Bezug genommen wird. Anstelle von oder zusätzlich zu den Substituenten der äußeren Benzolringe können die Anthracenderivate einen Substituenten in der 9- und/oder 10-Position aufweisen. Dabei handelt es sich bevorzugt um C₁-C₄-Alkylreste, wie Methyl, Ethyl, Isopropyl oder tert.-Butyl oder um C₁-C₄-Alkoxyreste, wie Methoxy, Ethoxy, n-Propyloxy oder n-Butyloxy.

Bevorzugt enthalten die erfindungsgemäß eingesetzten Klebemittel ein Gemisch aus wenigstens zwei Photoinitiatoren. Dabei kann zur Erhöhung der Quantenausbeute der von der Strahlungsquelle zur Verfügung gestellten Strahlung wenigstens einer der eingesetzten Photoinitiatoren als Sensibilisator wirken. Bevorzugt werden Gemische eingesetzt, die wenigstens ein Anthracenderivat und/oder Xanthonderivat, speziell wenigstens ein Thioxanthonderivat, und wenigstens einen davon verschiedenen Photoinitiator umfassen. Bevorzugt sind die im Gemisch mit den Anthracen- und/oder Xanthonderivaten eingesetzten Photoinitiatoren ausgewählt unter Hydroxycycloalkylphenonen, Acylphosphinoxiden und Mischungen davon. Diese Photoinitiatorengemische eignen sich besonders vorteilhaft für die Härtung mit UVemittierenden Leuchtdioden, die im Wesentliche reine UV-Strahlung emittieren. Sie absorbieren vorteilhafterweise Strahlung im UV-A-/UV-B-Wellenlängenbereich (400 bis 280 nm) des eingestrahlten Lichts, so dass auf den Einsatz von gefährlicher UV-C-Strahlung (280 bis 200 nm) verzichtet werden kann. Sie eignen sich insbesondere vorteilhaft für den Einsatz von Strahlungsquellen mit Leuchtdioden, die Strahlung im Bereich von 380 bis 420 nm und speziell etwa 405 bis 410 nm emittieren.

Die erfindungsgemäß eingesetzten Klebemittel enthalten die Photoinitiatorkomponente vorzugsweise in einer Menge von 0,1 bis 8 Gew.-%, besonders bevorzugt 1 bis 7 Gew.-% und insbesondere 2 bis 6 Gew.-%, bezogen auf das Gesamtgewicht des Klebemittels.

In einer weiteren usführungsforrn umfässt das erfindungsgemäß eingesetzte strahlungshärtbare Klebemittel wenigstens eine kationisch polymerisierbare Verbindung und wenigstens einen bei UV-Bestrahlung zur Bildung von die kationische Polymerisation initiierenden Kationen befähigten Photoinitiator. Die durch UV-Strahlung initiierte Härtung kationisch polymerisierbarer Verbindungen in Gegenwart geeigneter Photoinitiatoren ist prinzipiell bekannt und wird auch als "dark cure" bezeichnet, da die Härtung auch nach Beendigung der Bestrahlung sowie in nicht belichteten Bereichen fortschreitet. Bevorzugte strahlungshärtbare Klebemittel umfassen
a) wenigstens ein Epoxid,
b) gegebenenfalls wenigstens ein unter Alkoholen und Thiolen ausgewähltes Nukleophil und
c) einen kationischen Photoinitiator.

Geeignete kationische Photoinitiatoren sind z. B. Oniumsalze, Ferroceniumsalze oder Diazoniumsalze. Bevorzugte Oniumsalze sind unter Sulfonium- und lodonium-Salzen ausgewählt. z. B. Triarylsulfoniumsalze oder Diaryliodoniumsalze. Die Gegenionen der Oniumsalze, Ferroceniumsalze oder Diazoniumsalze sind nicht-nucleophile Anionen, wie Tetrafluoroborat, Tetrakis(pentafluorphenyl)borat, Hexafluorophosphat oder Hexafluoroantimonat. Geeignete handelsübliche kationische Photoinitiatoren sind z. B. die Folgenden

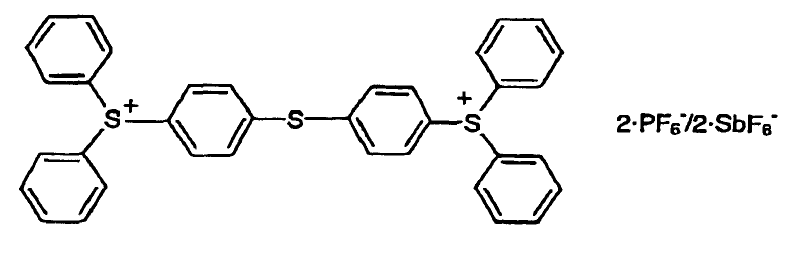

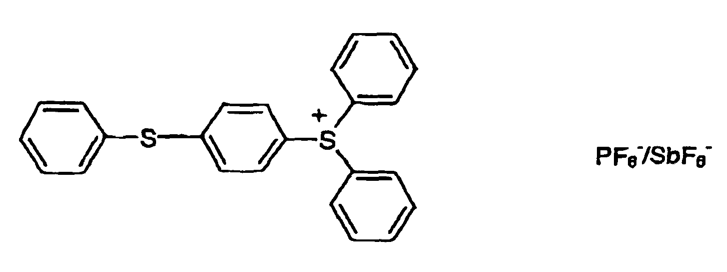

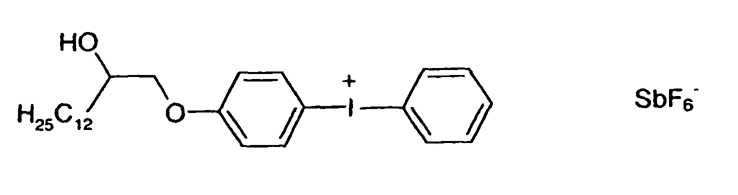

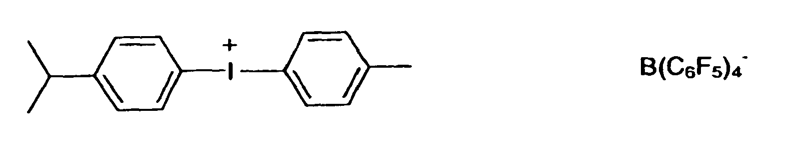

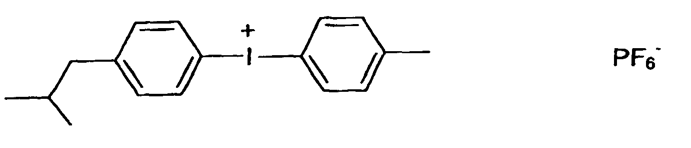

Geeignete kommerziell erhältliche kationische Photoinitiatoren sind z. B. OPTOMER®-SP-150, -151, -170 und -171 der Fa. Asahi Denka Ind. Co., Ltd., JP. Geeignet sind weiterhin CD 1012 der Fa. Sartomer, UVI-6976 und UVI-6992 der Fa. Union Carbide, Rhodorsil® R-2074 der Fa. Rhone Poulenc sowie lrgacure 250 und 261 der Fa. Ciba Spezialitätenchemie.

Unter Belichtung mittels UV-Licht führen die Oniumsalze zur Bildung von Supersäure, die die Ringöffnung des Epoxids katalysieren.

Geeignete Epoxide sind aliphatische und cycloaliphatische Epoxide wie z. B. 1,2-Epoxydodecan, Epichlorhydrin, Isoamylenoxid, α-Pinenoxid, Styroloxid, epoxidiertes Sojaöl oder Limonenmonooxid.

Weiterhin eignen sich Epoxyverbindungen mit wenigstens zwei Epoxidgruppen im Molekül sowie deren durch Vorverlängerung entstandene Verlängerungsprodukte (Präpolymere für Epoxyharze, wie sie z. B. in Ullmann's Encyclopedia of Industrial Chemistry, 6th Edition, 2000, Electronic Release, im Kapitel "Epoxy Resins" beschrieben sind).

Zu Epoxyverbindungen mit wenigstens zwei Epoxidgruppen im Molekül zählen vor allem:
i) Polyglycidyl- und Poly(β-methylglycidyl)ester, die erhältlich sind durch Umsetzung einer Verbindung mit wenigstens zwei Carboxylgruppen, wie einer aliphatischen oder aromatischen Polycarbonsäure, mit Epichlorhydrin oder β-Methylepichlorhydrin. Die Umsetzung erfolgt vorzugsweise in Gegenwart einer Base. Geeignete aliphatische Polycarbonsäuren sind Oxalsäure, Bernsteinsäure, Glutarsäure, Adipinsäure, Pimelinsäure, Azelainsäure, dimerisierte oder trimerisierte Linolensäure, Tetrahydrophthalsäure, Hexahydrophthalsäure oder 4-Methylhexahydrophthalsäure. Geeignete aromatische Polycarbonsäuren sind z. B. Phthalsäure, Isophthalsäure oder Terephthalsäure.
(ii) Polyglycidyl- oder Poly(β-methylglycidyl)ether, die sich z. B. von acyclischen Alkoholen, wie Ethylenglykol, Diethylenglykol, Poly(oxyethylen)glykolen, Propan-1,2-diol, Poly(oxypropylen)glykole, Propan-1,3-diol, Butan-1,4-diol, Poly(oxytetramethylen)glykole, Pentan-1,5-diol, Hexan-1,6-diol, Hexan-2,4,6-triol, Glycerin, 1,1,1-Trimethylolpropan, Pentaerythritol, Sorbitol; oder cyclischen Alkoholen wie 1,4-Cyclohexandimethanol, Bis(4-hydroxycyclohexyl)methan oder 2,2-Bis(4-hydroxycyclohexyl)propan ableiten; oder aromatische Kerne umfassen wie N,N-Bis(2-hydroxyethyl)anilin oder p,p-Bis(2-hydroxyethylamino)diphenylmethan.
   Die Glycidylether können sich auch von einkemigen Phenolen wie Resorcin oder Hydrochinon, oder mehrkernigen Phenolen, wie Bis(4-hydroxyphenyl)methan, 4,4'-Dihydroxybiphenyl Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan oder von Novolaken, die erhältlich sind durch Kondensation von Aldehyden wie Formaldehyd, Acetaldehyd, Chloral oder Furfural, mit Phenolen, wie Phenol, 4-Chlorphenol, 2-Methylphenol, 4-tert-Butylphenol, oder Bisphenolen.
(iii) Cycloaliphatische Epoxy-Verbindungen, wie Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat; oder gemischte cycloaliphatische-aliphatische Epoxy-Verbindungen wie Limonendiepoxid.

Zusätzlich können die strahlungshärtbaren Klebemittel wenigstens einen Alkohol, vorzugsweise Polyole, die wenigstens zwei Hydroxylgruppen umfassen, wie Ethylenglykol, Diethylenglykol, höhere Poly(oxyethylen)glykole, Propan-1,2-diol, Poly(oxypropylen)glykole, Propan-1,3-diol, Butan-1,4-diol, Poly(oxytetramethylen)glykole, Pentan-1,5-diol, Hexan-1,6-diol, Hexan-2,4,6-triol, Glycerin, 1,1,1-Trimethylolpropan, Pentaerythritol, Sorbitol enthalten.

Die erfindungsgemäß eingesetzten kationisch härtbaren Klebemittel enthalten die kationische Photoinitiatorkomponente vorzugsweise in einer Menge von 0,1 bis 8 Gew.-%, besonders bevorzugt 1 bis 7 Gew.-% und insbesondere 2 bis 6 Gew.%, bezogen auf das Gesamtgewicht des Klebemittels.

Ferner können die erfindungsgemäß eingesetzten strahlungshärtbaren Klebemittel je nach Verwendungszweck bis zu 10 Gew.-%, bezogen auf das Gesamtgewicht des Klebemittels, übliche Hilfsmittel, wie Reaktiwerdünner, Haftvermittler, Verdicker, Füllstoffe, Farbstoffe, enthalten. Geeignete Haftvermittler sind beispielsweise Silane und Phosphorsäuregruppen-haltige Acrylate. Geeignete Füllstoffe sind z. B. pyrogene Kieselsäuren, die auch als Thixotropierungsmittel dienen. Geeignete Farbstoffe sind beispielsweise organische und anorganische Pigmente, wie Titandioxid. Die erfindungsgemäß eingesetzten Klebemittel können gewünschtenfalls wenigstens ein inertes (nicht polymerisierbares) Lösungsmittel enthalten. Vorzugsweise sind die erfindungsgemäßen Klebemittel frei von Lösungsmitteln.

Die Formulierung der Klebemittel erfolgt nach üblichen, dem Fachmann bekannten Verfahren.

Die zur Verklebung eingesetzten Substrate sind vorzugsweise ausgewählt unter Polymeren, insbesondere Thermoplasten, wie Polyolefinen, Vinylpolymeren (z. B. Polystyrol. Polyvinylchlorid), Polyamiden, Polyestern, Polycarbonaten sowie Metallen, Glas, keramischen Materialien etc. Dabei ist wenigstens eines der Substrate im Bereich des aufgebrachten Klebemittels für UV-Strahlung ausreichend durchlässig, um eine Strahlungshärtung zu ermöglichen.

Die Herstellung einer Klebeverbindung erfolgt vorzugsweise, indem man
i) auf ein erstes Substrat ein strahlungshärtbares Klebemittel aufbringt, das wenigstens eine Leukobase eines Di- oder Triarylmethan-Farbstoffs enthält,
ii) im Bereich des Klebemittel wenigstens ein weiteres Substrat mit dem ersten in Kontakt bringt und
iii) das Klebemittel mit UV-Strahlung härtet,
wobei eine Kontrolle der Härtung über das Absorptionsspektrum der Klebeverbindung erfolgt.

Das Aufbringen des strahlungshärtbaren Klebemittels auf das erste Substrat in Schritt i) erfolgt in bekannter Weise, z. B. durch Spritzen, Spachteln, Rakeln, Rollen oder Gießen. Das Auftragsvolumen liegt in der Regel In einem Bereich von 0,01 bis 0,3 ml und vorzugsweise 0,03 bis 0,05 ml. Das Aufbringen kann bei Raumtemperatur wie auch bei erhöhter Temperatur, vorzugsweise jedoch nicht oberhalb 50 °C erfolgen. Anschließend wird das zweite Substrat in Schritt ii) im Bereich des Klebemittels mit dem ersten in Kontakt gebracht und durch eine geeigente Vorrichtung während der Bestrahlung im Schritt iii) fixiert.

Bevorzugt ist ein Intensitätsmaximum im Bereich von 315 bis 480 nm, insbesondere 380 bis 420 nm.

Die erfindungsgemäßen Klebemittel können allgemein durch Einwirkung energiereicher Strahlung, beispielsweise UV-Licht oder Elektronenstrahlung, gehärtet werden. Vorzugsweise erfolgt die Aushärtung mittels UV-Strahlung. Geeignete Bestrahlungsvorrichtungen zur UV-Härtung sind allgemein bekannt und umfassen beispielsweise übliche Mitteldruck- oder Hochdruckgasentladungslampen. Vorzugsweise wird eine Strahlungsquelle eingesetzt, deren Intensitätsmaximum im Bereich von 280 bis 500 nm, bevorzugt von 280 bis 400 nm (UV-A- UV-B-Strahlung) liegt. In einer bevorzugten Ausführungsform wird eine Strahlungsquelle eingesetzt, die im Wesentlichen reine UV-Strahlung und keine IR-Strahlung emittiert Derartige Rein-UV-Bestrahlungsvorrichtungen sind prinzipiell bekannt und werden beispielsweise in der DE-A-196 51 977, WO 99/46546 und WO 99/46546 beschrieben. Nach einer weiteren bevorzugten Ausführungsform wird zur Härtung eine Bestrahlungsvorrichtung eingesetzt, die als Strahlungsquelle eine oder mehrere leuchtdioden umfasst.

Bevorzugt sind Leuchtdioden, die im Wesentlichen reine UV-Strahlung emittieren. Das intensitätsmaximum der eingesetzten Strahlungsquelle liegt dann vorzugsweise In einem Bereich von 280 bis 500 nm, besonders bevorzugt von 315 bis 480 nm und insbesondere von 380 bis 420 nm. Besonders geeignet sind beispielsweise Leuchtdioden, die blaues Licht im Bereich von 405 bis 410 nm emittieren. Derartige LED sind kommerziell beispielsweise von der Fa. Osram erhältlich. Die als Strahlungsquelle eingesetzten Leuchtdioden emittieren dabei im Wesentlichen keine IR-Strahlung.

In einer bevorzugten Ausführungsform erfolgt die Herstellung der Klebeverbindung nach dem erfindungsgemäßen Verfahren in Gegenwart eines Inertgases. Der Einsatz eines Inertgases ist beispielsweise von Vorteil, wenn die Härtung des eingesetzten Klebemittels durch Sauerstoff inhibiert wird oder bei der Bestrahlung besonders empfindlicher Substrate, wie z. B. Bioassays. Geeignete Inertgase sind z. B. Edelgase, wie Argon, Stickstoff und vorzugsweise Kohlendioxid. Eine Kohlendioxid-Atmosphäre hat gegenüber einer Stickstoff-Atmosphäre den Vorteil, dass gasförmiges Kohlendioxid schwerer ist als Luft, so dass das Kohlendioxid nicht flüchtig ist und keine komplizierten Gehäuse und Abdichtungen erforderlich sind. Die Bereitstellung des Kohlendioxids kann beispielsweise aus Druckbehältem oder als Trockeneis erfolgen. Letzteres ist besonders vorteilhaft bei einem Einsatz im nichtstationären bzw. nichtindustriellen Bereich.

Das erfindungsgemäße Verfahren eignet sich in vorteilhafter Weise zur Herstellung von Klebeverbindungen zwischen Substraten für einen Einsatz in der Medizintechnik und der Elektronikindustrie. Es eignet sich insbesondere zum Kleben von Nadeln in Einwegspritzen, zum Anbringen von Schlauchverbindungen, Dreiwegehähnen und Verbindungsstücken bei medizinischen Einwegartikeln, bei der Herstellung von Beatmungsmasken, Kathetem, Filtern und Oxygenatoren, bei der Herstellung von optischen Erzeugnissen, wie Kontaktlinsen, Brillen, Miniaturkameras und Endoskopen sowie zur Herstellung von Klebeverbindungen im Bereich von Halbleiterelementen, Leiterplatten, elektrischen Kontakten und Relais.

Ein weiterer Gegenstand der Erfindung ist ein Klebemittel in Form einer Handelpackung, enthaltend wenigstens ein strahlungshärtbares Klebemittel, wie zuvor definiert, zusammen mit Instruktionen für die Klebeanwendung. Gegenstand dieser Instruktionen sind beispielsweise Einsatzmengen und Angaben zur Änderung des Absorptionsverhaltens des Klebemittels im Verlauf der Härtung.

Die Erfindung wird anhand der folgenden, nicht einschränkenden Beispiele näher ertäutert.

Zur Strahlungshärtung wurde ein UVASPOT 2000®-Strahler der Fa. Dr. Hönle AG eingesetzt.

### A) Herstellung der strahlungshärtbaren Klebemittel:

### Beispiel 1 (erfindungsgemäß)

Aus 22 Gew.-% eines Urethan(meth)acrylats, 4 Gew.-% Hydroxypropylmethacrylat, 20 Gew.-% N,N-Dimethylacrylamid, 50 Teilen Isobomylacrylat und 4 Teilen eines Photoinitiatorgemischs (2 Gew.-% 2,4,6-Trimethylbenzoyldiphenylphosphinoxid, (Lucirin® TPO der Fa. BASF Aktiengesellschaft) und 2 Gew.-% eines Gemischs aus 1-Hydroxycyclohexylbenzophenon und Benzophenon (Irgacure® 500, Fa. Ciba Spezialitätenchemie AG)) sowie 0,03 Gew.-% Leucokristallviolett wurde unter intensivem Mischen ein Klebemittel formuliert. Die Klebemittelformulierungen der folgenden Tabelle wurden analog hergestellt.

| Bsp.- Nr. | Urethan- acrylat [Gew.-%] | IBA¹⁾ [Gew.-%] | NNDMA ²⁾ [Gew.-%] | HPMA³⁾ [Gew.-%] | EOA ⁴⁾ [Gew.-%] | Farbstoff je 0,03 Gew.-% | Photoinitiator [Gew.-%] |
|---|---|---|---|---|---|---|---|
| 1 | 22 | 50 | 20 | 4 | | Leucokristallviolett | 2 lucirin® TPO |
| | | | | | | | 2 Irgacure® 500 |
| 2 | 45 | 42 | 5 | 2 | | Leucokristallviolett | 4 Irgacure® 1700 ⁵⁾ |
| | | | | | | | 2 Irgacure® 500 |
| 3 | 15 | 65 | 8 | 6 | | Leucomalachitgrün | 4 Irgacure® 819 ⁶⁾ |
| | | | | | | | 2 Irgacure® 500 |
| 4 | 32 | 45 | 10 | 10 | | Leucomalachitgrün | 1 Irgacure® 819 |
| | | | | | | | 2 Irgacure® 500 |
| 5 | 46 | 25 | 12 | 13 | | Leucomalachitgrün | 3 Lucirin® TPO |
| | | | | | | | 1 Irgacure® 184 ⁷⁾ |
| 6 | 54 | 25 | 4 | 13 | | Leucomalachitgrün | 3 Irgacure® 1700 |
| | | | | | | | 1 Irgacure® 184 |
| 7 | 26 | 45 | 15 | 10 | | Leucomalachitgrün | 3 Irgacure® 819 |
| | | | | | | | 1 Irgacure® 184 |
| 8 | 71 | -- | 19 | 4 | | Leucokristallviolett | 5 Darocure® 1173⁸⁾ |
| | | | | | | | 3 Irgacure® 184 |
| 9 | 42 | 48 | 3 | 2 | | Sudanschwarz | 3 Lucirin® TPO |
| | | | | | | | 2 Irgacure® 184 |
| 10 | 71 | -- | 19 | 2 | 2 | Leucokristallviolett | 5 Darocure® 1173 ⁸⁾ |
| | | | | | | | 3 Irgacure® 184 |

| | | | | | | | |
|---|---|---|---|---|---|---|---|
| ¹⁾ lsobornylacrylat | | | | | | | |
| ²⁾ N,N-Dimethylacrylamid | | | | | | | |
| ³⁾ Hydroxypropylmethacrylat | | | | | | | |
| ⁴⁾ 2-(2-Ethoxyethoxy)ethylacrylat | | | | | | | |
| ⁵⁾ Mischung aus (2,6-Dimethoxybenzoyl)-2,4,4-trimethylpentylphosphinoxid und 2-Hydroxy-2-methyl-1-phenylpropan-1-on | | | | | | | |
| ⁶⁾ Phenyl-bis(2,4,6-trimethylbenzoyl)phosphinoxid | | | | | | | |
| ⁷⁾ 1-Hydroxycyclohexylbenzophenon | | | | | | | |
| ⁸⁾ 1-Phenyl-2-hydroxy-2-methylpropan-1-on | | | | | | | |

### B) Herstellung von Verklebungen

### Beispiel 11 (erfindungsgemäß)

Eine Edelstahlnadel mit einem Durchmesser von 2 mm wird in eine Polycarbonatkanüle eingeklebt. Dazu wird die Nadel in die Kanüle gefügt und der Klebstoff aus Beispiel 1 anschließend aufgetragen, so dass der Klebstoff sich über Kapillarkräfte in der Verbindung verteilt. Mit einem UVASPOT 2000®-Strahler der Fa. Dr. Hönle AG wird der Klebstoff ausgehärtet, bis die Verklebung eine blauviolette Färbung aufweist. Die resultierende Verklebung weist eine Auszugskraft von 100 N auf.

## Patentansprüche

1. Verfahren zur Herstellung einer Klebeverbindung, bei dem man ein erstes Substrat, ein strahlungshärtbares Klebemittel, das wenigstens eine Leukobase eines Di- oder Triarylmethan-Farbstoffs und/oder wenigstens einen Azofarbstoff enthält, und wenigstens ein weiteres Substrat miteinander in Kontakt bringt und anschließend das Klebemittel mit UV-Strahlung härtet, wobei eine Kontrolle der Härtung über das Absorptionsverhalten der Klebeverbindung erfolgt.

2. Verfahren nach Anspruch 1, wobei das strahlungshärtbare Klebemittel, wenigstens eine Leukobase eines Di- oder Triarylmethan-Farbstoffs und gegebenenfalls zusätzlich einen Azofarbstoff enthält.

3. Verfahren nach einem der vorhergehenden Ansprüche, wobei die Leukobase des Di- oder Triarylmethan-Farbstoffs ausgewählt ist unter Verbindungen der allgemeinen Formel I. 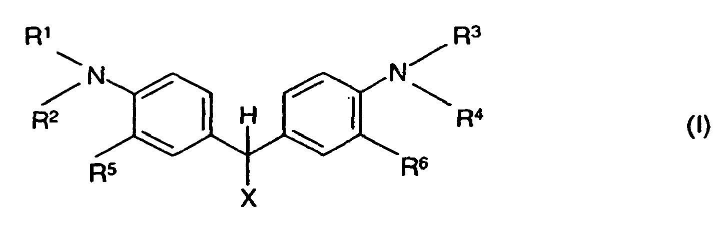 worin
R¹, R², R³ und R⁴ unabhängig voneinander jeweils für C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl stehen,
R⁵ und R⁶ unabhängig voneinander jeweils für Wasserstoff oder Methyl stehen, und
X für Wasserstoff, gegebenenfalls substituiertes Phenyl oder gegebenenfalls substituiertes Naphthyl steht.

4. Verfahren nach einem der vorhergehenden Ansprüche, wobei der Azofarbstoff ausgewählt ist unter Verbindungen der allgemeinen Formel 11 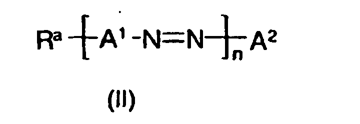 worin
R^{a} für Wasserstoff oder einen davon verschiedenen Substituenten steht,
A¹ und A² unabhängig voneinander für Aryl- oder Hetarylreste stehen, die 1, 2, 3 oder 4 Substituenten aufweisen können, die ausgewählt sind unter C₁-C₈-Alkyl, Hydroxy, Hydroxy-C₁-C₆-akyl, C₁-C₆-Alkoxy, C₁-C₆-Alkylthio, Amino, C₁-C₆-Alkylamino, Di-(C₁-C₆-)alkylamino, Carboxylat, Sulfonat, Sulfonamid, Alkoxycarbonyl, Acyl, C₁-C₆₋Alkylaminocarbonyl, Di-(C₁-C₆-)alkylaminocarbonyl, C₁-C₆-Alkylcarbonylamino, Nitro, Halogen und Cyano, und
n für eine ganze Zahl von 1 bis 4 steht.

5. Verfahren nach einem der vorhergehenden Ansprüche, bei dem das stmhlungshärtbare Klebemittel wenigstens eine weitere Farbkomponente enthält, die unter den Härtungsbedingungen Im Wesentlichen keine Änderung ihres Absorptionsverhaltens erfährt.

6. Verfahren nach Anspruch 5. wobei die weitere Farbkomponente wenigstens ein Pigment umfasst.

7. Verfahren nach einem der Ansprüche 1 bis 6, bei dem das strahlungshärtbare Klebemittel wenigstens ein Polymer mit ethylenisch ungesättigten Doppelbindungen aufweist, das ausgewählt ist unter Dien-Homo- und Copolymeren, Polyurethanen, Polyestern, Polyethern, Epoxidharzen, Melaminharzen, Copolymerisaten auf der Basis von (Meth)acrylsäureaMern, Silikonen und Mischungen davon.

8. Verfahren nach Anspruch 7, bei dem das strahlungshärtbare Klebemittel wenigstens einen Photoinitiator enthält der ausgewählt ist unter Hydroxycycloalkylphenonen, aromatischen Acyloinen, Benzophenon, Benzophenonderivaten, Michlers Keton, Anthracenderivaten, Naphthochinonen, Anthrachinon und Anthrachinonderivaten, Xanthon und Xanthonderivaten, Acylphosphinoxiden, Thiopropionsäureestem und Mischungen davon.

9. Verfahren nach einem der Ansprüche 1 bis 6, bel dem das strahlungshärtbare Klebemittel wenigstens eine kationisch polymerisierbare Verbindung und wenigstens einen bei UV-Bestrahlung zur Bildung von die kationische Polymerisation initiierenden Kationen befähigten Polymerisationsinitiator umfasst.

10. Verfahren nach einem der vorhergehenden Ansprüche, bei dem man wenigstens einen Messwert für die Härte der Verklebung zwischen dem ersten und dem/den weiteren Substrat(en) gewinnt und aus diesen Messwerten Regelungseingriffe zur Regelung der Härtung bildet.

11. Verfahren nach einem der vorhergehenden Ansprüche, bei dem eine Strahlungsquelle eingesetzt wird, deren Intensitätsmaximum im Bereich von 280 bis 500 nm liegt.

12. Verfahren nach Anspruch 11, wobei zur Härtung eine Bestrahlungsvorrichtung eingesetzt wird, die als Strahlungsquelle eine oder mehrere Leuchtdioden umfasst.

13. Verfahren nach einem der vorhergehenden Ansprüche, bei dem die Herstellung der Klebeverbindung in Gegenwart eines Inertgases erfolgt.

14. Verfahren nach einem der vorhergehenden Ansprüche zur Herstellung von Klebeverbindungen zwischen Substraten für einen Einsatz in der Medizintechnik und der Elektronikindustrie.

15. Verfahren nach Anspruch 14 zum Kleben von Nadeln in Einwegspritzen, zum Anbringen von Schlauchverbindungen, Dreiwegehähnen und Verbindungsstücken bei medizinischen Einwegartikeln, bei der Herstellung von Beatmungsmasken, Kathetern, Filtern und Oxygenatoren, bei der Herstellung von optischen Erzeugnissen, wie Kontaktlinsen, Brillen, Miniaturkameras und Endoskopen sowie zur Herstellung von Klebeverbindungen im Bereich von Halbleiterelementen, Leiterplatten, elektrischen Kontakten und Relais.

16. Klebemittel in Form einer Handelpackung enthaltend wenigstens ein strahlungshärtbares Klebemittel, wie in einem der Ansprüche 1 bis 9 definiert, zusammen mit Instruktionen für die Klebeanwendung.

## Claims

1. Method of producing an adhesive bond, in which a first substrate, a radiation-curable adhesive which comprises at least one leuco base of a di- or triarylmethane dye and/or at least one azo dye, and at least one further substrate are brought into contact with one another and then the adhesive is cured with UV radiation, the curing being monitored by the absorption behaviour of the adhesive bond.

2. Method according to Claim 1, wherein the radiation-curable adhesive comprises at least one leuco base of a di- or triarylmethane dye and if desired additionally an azo dye.

3. Method according to one of the preceding claims, wherein the leuco base of the di- or triarylmethane dye is selected from compounds of the general formula I 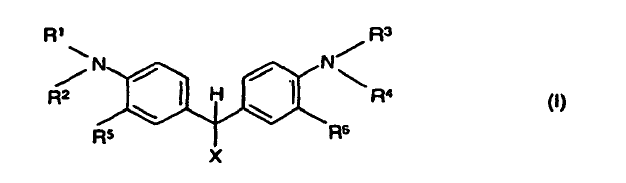 in which
R¹, R², R³ and R⁴ independently of one another are each C₁-C₈alkyl which is unsubstituted or substituted and may be interrupted by 1 to 3 oxygen atoms in ether function, or are each phenyl or C₁-C₄alkyl-phenyl,
R⁵ and R⁶ independently of one another are each hydrogen or methyl and
X is hydrogen, unsubstituted or substituted phenyl or unsubstituted or substituted naphthyl.

4. Method according to one of the preceding claims, wherein the azo dye is selected from compounds of the general formula II 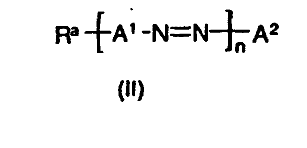 in which
R^{a} is hydrogen or a substituent other than hydrogen,
A¹ and A² independently of one another are aryl or hetaryl radicals which may contain 1, 2, 3 or 4 substituents selected from C₁-C₈alkyl, hydroxyl, hydroxy-C₁-C₈alkyl, C₁-C₆alkoxy, C₁-C₆alkylthio, amino, C₁-C₈alkylamino, di(C₁-C₆)alkylamino, carboxylate, sulphonate, sulphonamide, alkoxycarbonyl, acyl, C₁-C₆alkylaminocarbonyl, di (C₁-C₆) alkylaminocarbonyl, C₁-C₈alkylcarbonylamino, nitro, halogen and cyano, and
n is an integer from 1 to 4.

5. Method according to one of the preceding claims, wherein the radiation-curable adhesive comprises at least one further colour component which undergoes substantially no change in its absorption behaviour under the curing conditions.

6. Method according to Claim 5, wherein the further colour component comprises at least one pigment.

7. Method according to one of Claims 1 to 6, wherein the radiation-curable adhesive comprises at least one polymer containing ethylenically unsaturated double bonds and selected from diene homopolymers and copolymers, polyurethanes, polyesters, polyethers, epoxy resins, melamine resins, copolymers based on (meth)acrylic esters, silicones and mixtures thereof.

8. Method according to Claim 7, wherein the radiation-curable adhesive comprises at least one photoinitiator selected from hydroxycycloalkylphenones, aromatic acyloins, benzophenone, benzophenone derivatives, Michler's ketone, anthracene derivatives, naphthoquinones, anthraquinone and anthraquinone derivatives, xanthone and xanthone derivatives, acylphosphine oxides, thiopropionic esters and mixtures thereof.

9. Method according to one of Claims 1 to 6, wherein the radiation-curable adhesive comprises at least one cationically polymerizable compound and at least one polymerization initiator capable, under UV irradiation, of forming cations which initiate cationic polymerization.

10. Method according to one of the preceding claims, wherein at least one measured value is obtained for the hardness of the bond between the first and the further substrate(s) and these measured values are used to form regulating interventions for regulating the curing.

11. Method according to one of the preceding claims, wherein a radiation source is used whose intensity maximum lies in the range from 280 to 500 nm.

12. Method according to Claim 11, wherein curing is carried out using an irradiation apparatus comprising as its radiation source one or more light-emitting diodes.

13. Method according to one of the preceding claims, wherein the adhesive bond is produced in the presence of an inert gas.

14. Method according to one of the preceding claims for producing adhesive bonds between substrates for use in medical engineering and the electronics industry.

15. Method according to Claim 14 for bonding needles in disposable syringes, for attaching tube connections, three-way taps and connectors in disposable medical devices, in the production of respiratory masks, catheters, filters and oxygenators, in the production of optical products, such as contact lenses, spectacles, miniature cameras and endoscopes, and for producing adhesive bonds in the area of semiconductor elements, printed circuit boards, electrical contacts and relays.

16. Adhesive in the form of a commercial pack containing at least one radiation-curable adhesive as defined in any one of Claims 1 to 9, together with instructions for its use in bonding.

## Revendications

1. Procédé de fabrication d'un joint adhésif, dans lequel on met en contact réciproque un premier substrat, une colle durcissable par irradiation qui contient au moins une leucobase d'un colorant de di ou triarylméthane et/ou au moins un colorant azo, et au moins un autre substrat, et on durcit ensuite la colle par rayonnement UV, un contrôle du durcissement étant effectué par le comportement d'absorption du joint adhésif.

2. Procédé selon la revendication 1, dans lequel la colle durcissable par irradiation contient au moins une leucobase d'un colorant de di ou triarylméthane et le cas échéant en plus un colorant azo.

3. Procédé selon l'une des revendications précédentes, dans lequel la leucobase du colorant de di ou triarylméthane est choisie parmi les composés de formule générale I 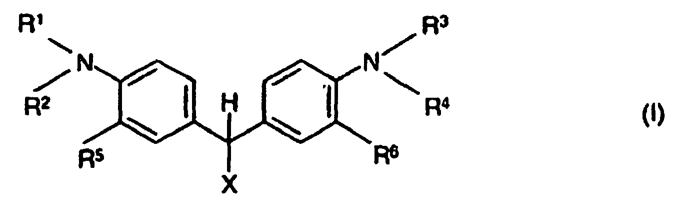 dans laquelle :
R¹, R², R³ et R⁴, indépendamment l'un de l'autre, représentent chacun un alkyle en C₁-C₈, le cas échéant substitué, et peut être interrompu par 1 à 3 atomes d'oxygène en fonction éther, un phényle ou un alkylphényle en C₁-C₄,
R⁵ et R⁶ indépendamment l'un de l'autre, représentent chacun un hydrogène ou un méthyle, et
X représente l'hydrogène, un phényle le cas échéant substitué ou un naphthyle le cas échéant substitué.

4. Procédé selon l'une des revendications précédentes, dans lequel le colorant azo est choisi parmi les composés de formule générale II 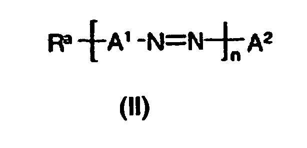 dans laquelle :
R^{a} représente un hydrogène ou un substituant différent de celui-ci,
A¹ et A², indépendamment l'un de l'autre, représentent des radicaux aryle ou hétaryle qui peuvent présenter 1, 2, 3 ou 4 substituants qui sont choisis parmi l'alkyle en C₁-C₈, l'hydroxy, l'hydroxy-alkyle en C₁-C₆, l'alkoxy en C₁-C₆, l'alkylthio en C₁-C₆, l'amino, l'alkylamino en C₁-C₆, le dialkylamino en C₁-C₆, le carboxylate, le sulfonate, le sulfonamide, l'alkoxycarbonyle, l'acyle, l'alkylaminocarbonyle en C₁-C₆, le di-alkylaminocarbonyle en C₁-C₆, l'alkylcarbonylamino en C₁-C₆, le nitro, l'halogène et le cyano, et
n représente un nombre entier de 1 à 4.

5. Procédé selon l'une des revendications précédentes, dans lequel la colle durcissable par irradiation contient au moins un autre composant de couleur qui n'expérimente, dans les conditions de durcissement, pratiquement aucune modification de son comportement d'absorption.

6. Procédé selon la revendication 5, dans lequel l'autre composant de couleur comprend au moins un pigment.

7. Procédé selon l'une des revendications 1 à 6, dans lequel la colle durcissable par irradiation présente au moins un polymère avec des liaisons doubles éthyléniquement insaturées, sélectionné parmi les homo et copolymères de diène, les polyuréthannes, les polyesters, les polyéthers, les résines époxydiques, les résines de mélamine, les copolymères à base d'esters d'acide (méth)acrylique, les silicones et des mélanges de ceux-ci.

8. Procédé selon la revendication 7, dans lequel la colle durcissable par irradiation contient au moins un photoinitiateur choisi parmi les hydroxycycloalkylphénones, les acyloïnes aromatiques, la benzophénone, les dérivés de benzophénone, la cétone de Michler, les dérivés d'anthracène, les naphthoquinones, l'anthraquinone et les dérivés d'anthraquinone, le xanthone et les dérivés de xanthone, les oxydes acylphosphiniques, les esters d'acide thiopropionique et des mélanges de ceux-ci.

9. Procédé selon l'une des revendications 1 à 6, dans lequel la colle durcissable par irradiation comprend au moins un composé cationiquement polymérisable et au moins un initiateur de polymérisation rendu apte, lors de l'irradiation d'UV, à former des cations initiant la polymérisation cationique.

10. Procédé selon l'une des revendications précédentes, dans lequel on obtient au moins une valeur de mesure pour la dureté du collage entre le premier et le ou les autres substrats et on forme à partir de ces valeurs de mesure des corrections de réglage pour régler le durcissement.

11. Procédé selon l'une des revendications précédentes, dans lequel on utilise une source de rayonnement dont l'intensité maximale est située entre 280 et 500 nm.

12. Procédé selon la revendication 11, dans lequel pour le durcissement, on utilise un dispositif de rayonnement qui comprend comme source de rayonnement, une ou plusieurs diodes électroluminescentes.

13. Procédé selon l'une des revendications précédentes, dans lequel la fabrication du joint adhésif s'effectue en présence d'un gaz inerte.

14. Procédé selon l'une des revendications précédentes pour la fabrication de joints adhésifs entre des substrats pour une utilisation dans la technique médicale et l'industrie électronique.

15. Procédé selon la revendication 14 pour le collage d'aiguilles dans des injections à usage unique, pour la fixation de raccords de tuyaux, de robinets à trois voies et de pièces de raccords dans des articles médicaux à usage unique, dans la fabrication de masques respiratoires, de cathéters, de filtres et d'oxygénateurs, dans la fabrication de produits optiques, comme les lentilles de contact, les lunettes, les caméras miniatures et les endoscopes ainsi que pour la fabrication de joints adhésifs dans le secteur des éléments à semi-conducteurs, des cartes de circuits imprimés, des contacts et des relais électriques.

16. Colle sous forme d'emballage du commerce contenant au moins une colle durcissable par irradiation, comme c'est défini dans une des revendications 1 à 9, avec des instructions pour l'application de la colle.
